# EUROPÄISCHE PATENTANMELDUNG

(11) **EP 2 962 967 A1**
(43) Veröffentlichungstag der Anmeldung: **06.01.2016**
(21) Anmeldenummer: 15175484.3
(22) Anmeldetag: 06.07.2015
(51) Int. Cl.: B65G 69/28

(54) **VERLADERAMPE**

(30) Priorität: 04.07.2014 DE 102014009939
(71) Anmelder: Wilhelm Husen, Stahlbau GmbH & Co. KG, 26903 Surwold (DE); Taubken Bau GmbH, 26901 Lorup (DE)
(72) Erfinder: Taubken, Gerhard, 26901 Lorup (DE)
(74) Vertreter: Jabbusch, Matthias

(57) **Zusammenfassung**

Eine Baueinheit, die für eine Verladebrücke zum Be- und Entladen von Lastkraftwagen vorgesehen ist, hat wenigstens ein einen Nischenraum (1) ausbildendes Betonfertigteil (13) und wenigstens eine in dem Betonfertigteil (13) vergossene Anschlussstruktur, wobei die Anschlussstruktur wenigstens eine Entwässerungsrinne (2) mit wenigstens einer Ablaufstruktur aufweist. Diese hat wenigstens eine mit dem Betonfertigteil (13) vergossene Rohrleitung (3).

## Beschreibung

Die Erfindung betrifft eine Baueinheit für eine Verladebrücke zum Be- und Entladen von Lastkraftwagen, mit wenigstens einem einen Nischenraum ausbildenden Betonfertigteil und wenigstens einer in dem Betonfertigteil vergossenen Anschlussstruktur.

Bekannte Verladebrücken werden oftmals auch als Überladebrücken bezeichnet. In einem Fundament einer höher liegenden Flurförderebene wird der Nischenraum zur Aufnahme einer höhenverstellbaren Laderampe ausgebildet. Dazu ist die Anschlussstruktur regelmäßig als Tragrahmen zur Verankerung eines Hebezeuges ausgebildet, mit welchem die Laderampe innerhalb ihres Nischenraumes verschwenkt wird. Beim Verladen bzw. Überladen von Gütern, insbesondere Lebensmitteln und Futtermitteln kommt es regelmäßig zu Leckagen und damit zu einer Verunreinigung des die Flurförderebene ausbildenden Bodens. Zum Reinigen des Bodens wird dieser dann ebenso regelmäßig mit einem Waschwasser abgespritzt, welches in die zwischen Laderampe und Fundament ausgebildeten Spalten hindurch, über den Nischenraum auf den der Verladebrücke vorgelagerten Rangierplatz ablaufen kann. Dadurch kann es jedoch zeitweise zu erheblichen Verunreinigungen der von Lastkraftwagen befahrenen Rangierplätze und in der Folge zu Geruchsbelästigungen von Personal und Anwohnern kommen. Auch stellen derartige Verunreinigungen für die auf den Rangierplätzen verkehrenden Lastkraftwagen eine erhöhte Unfallgefahr dar. Zudem können die hygienischen Verhältnisse weiter beeinträchtigende Tiere angezogen werden, welche im Waschwasser enthaltene Nahrungsmittelleckagen als Nahrungsquelle nutzen.

Der Erfindung liegt deshalb die Aufgabe zugrunde, eine Baueinheit der Eingangs genannten Gattung aufzuzeigen, mit der die hygienischen Verhältnisse an den eine Verladebrücke umgebenden Bereichen nachhaltig verbessert ist.

Diese Aufgabe ist erfindungsgemäß durch eine Baueinheit mit den Merkmalen des Patentanspruchs 1 gelöst. Vorteilhafte Weiterbildungen sind in den Unteransprüchen angegeben.

Die erfindungsgemäße Baueinheit zeichnet sich dadurch aus, dass die Anschlussstruktur wenigstens eine Entwässerungsrinne aufweist. Die Entwässerungsrinne ermöglicht einen kontrollierten Abfluss des in den Nischenraum gelangenden Waschwassers, sodass eine Verunreinigung des der Verladebrücke vorgelagerten Rangierplatzes mit Leckagen ausgeschlossen ist. Um die hygienischen Verhältnisse verschlechternde Korrosionserscheinungen zu vermeiden, weist die Entwässerungsrinne einen Korrosionsschutz, beispielsweise eine Verzinkung auf.

Nach einer ersten Weiterbildung der Erfindung weist die Entwässerungsrinne wenigstens eine Ablaufstruktur auf. Für ein schwerkraftbetätigtes Abfließen des Wassers über die Entwässerungsrinne aus dem in dem Betonfertigteil ausgebildeten Nischenraum heraus weist die Entwässerungsrinne ein Gefälle in Richtung ihres Ablaufes auf. Das Gefälle ist vorzugsweise konstant ausgebildet, kann jedoch im Falle eines Einsatzes von Fallrohren oder Trichterstücken unterschiedlich sein.

Nach einer nächsten Weiterbildung der Erfindung weist die Ablaufstruktur wenigstens eine mit dem Betonfertigteil vergossene Rohrleitung auf. Diese ist mit besonderem Vorteil dazu geeignet, die Ablaufstruktur aus dem Nischenraum heraus durch das den Nischenraum begrenzende Betonfertigteil hindurch zu führen. Auf diese Weise ist die Ablaufstruktur im Inneren des Betonfertigteils weitgehend zerstörungssicher untergebracht.

Vorzugsweise ist die Anschlussstruktur als Tragrahmen eines Hebezeugs ausgebildet. Grundsätzlich ist es jedoch ebenso denkbar, die Anschlussstruktur als irgendeine Anschlussbewehrung auszuführen, die im einfachsten Fall ausschließlich die Entwässerungsrinne aufweist oder diese zumindest aufzunehmen vermag.

Nach einer besonders vorteilhaften Weiterbildung der Erfindung weist die Anschlussstruktur wenigstens ein Fangblech auf, wobei die Entwässerungsrinne eine in dem Fangblech ausgebildete Umformung ist. Mit der auf diese Weise zwischen Fangblech und Entwässerungsrinne hergestellten Einstückigkeit ist zuverlässig verhindert, dass die Entwässerungsrinne im Bereich von belastungsbedingten Grenzschichtablösungen von Waschwasser hinterlaufen wird. Mit der vorzugsweise im Schwenkbiegeverfahren hergestellten Umformung kann die Entwässerungsrinne sowohl rechteckige, als auch trapezförmige oder halbrunde Strömungsquerschnitte aufweisen.

Um das Abfließen des mit Nahrungsmittel- oder Futtermittelleckagen beladenen Waschwassers weiter zu verbessern, hat das Fangblech wenigstens ein in die Entwässerungsrinne laufendes Gefälle. Lediglich in seiner einfachsten Ausführungsform ist das Gefälle über die Fläche des Fangbleches hinweg konstant gehalten.

Insbesondere im Falle eines mit einem einzigen konstanten Gefälle ausgebildeten Fangbleches wird vorgeschlagen, die Entwässerungsrinne mit einem sich über die gesamte Breite des Nischenraumes ersteckenden Verlauf auszubilden. Damit weist die Entwässerungsrinne für das Waschwasser eine Barrierefunktion auf, mit der zuverlässig verhindert ist, dass Waschwasser auf den einer Verladebrücke vorgelagerten Rangierplatz ablaufen kann.

Nach einer nächsten Weiterbildung der Erfindung ist die Entwässerungsrinne am Nischeneingang des Nischenraumes gelegen. Damit ist im Falle einer in der Ablaufstruktur der Entwässerungsrinne auftretenden Verstopfung sichergestellt, dass das Waschwasser in einer Notfunktion in der bekannten Weise auf den der Verladebrücke vorgelagerten Rangierplatz ablaufen kann. Außerdem gewährleistet die Lage der Entwässerungsrinne am Nischeneingang die für Reinigungsarbeiten erforderliche Zugänglichkeit.

Nach einer anderen vorteilhaften Weiterbildung der Erfindung ist die Entwässerungsrinne an einen Problemstoffabscheider angeschlossen. Im Falle eines mit Lebensmittel- oder Futtermittelleckagen beladenen Waschwassers ist ein solcher Problemstoffabscheider vorzugsweise ein Fettabscheider.

Ein Ausführungsbeispiel der Erfindung, aus dem sich weitere erfinderische Merkmale ergeben, ist in der Zeichnung dargestellt. Es zeigen:
- Fig. 1: eine perspektivische Ansicht einer Anschlussstruktur für eine erfindungsgemäße Baueinheit;
- Fig. 2: eine perspektivische Teilansicht der Anschlussstruktur gemäß Fig. 1 in vergrößertem Maßstab; und
- Fig. 3: eine perspektivische Ansicht einer erfindungsgemäßen Baueinheit mit einer Anschlussstruktur gemäß den Figuren 1 und 2.

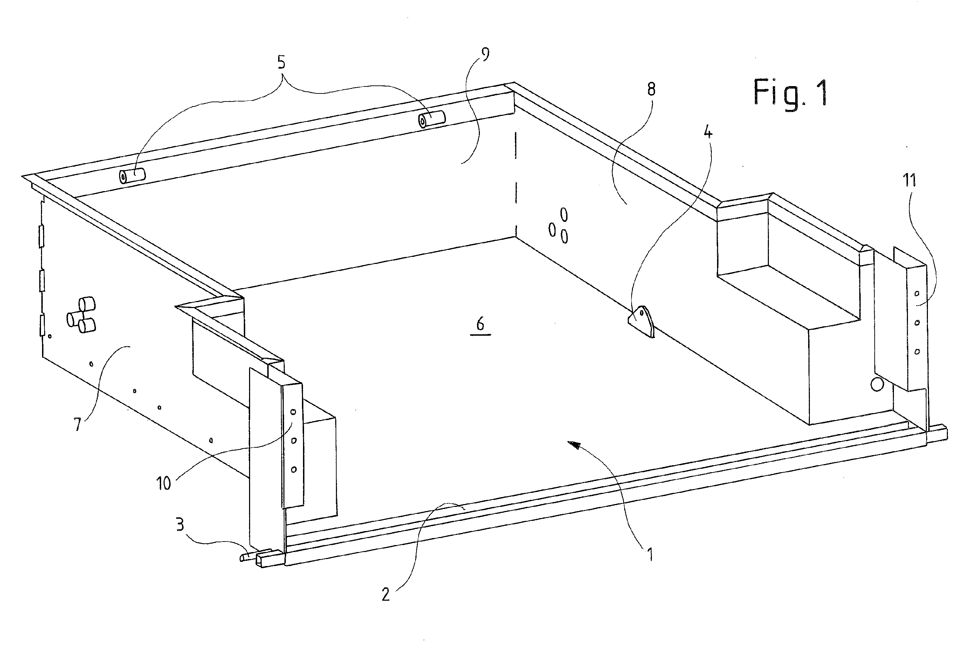

Die Fig. 1 zeigt eine perspektivische Ansicht einer Anschlussstruktur für eine erfindungsgemäße Baueinheit mit einem einen Nischenraum 1 ausbildenden Betonfertigteil, in welchem die Anschlussstruktur zu vergießen ist. Um die hygienischen Verhältnisse an Verladebrücken zu verbessern, hat die Anschlussstruktur eine Entwässerungsrinne 2 mit einer Ablaufstruktur. Die Ablaufstruktur weist eine mit dem Betonfertigteil zu vergießende Rohrleitung 3 auf. Mit Anschlagmitteln 4, 5 ist die Anschlussstruktur auch als Tragrahmen eines nicht dargestellten Hebezeuges ausgebildet. Außerdem weist die Anschlussstruktur ein Fangblech 6 auf, wobei die Entwässerungsrinne 2 eine in dem Fangblech 6 ausgebildete Umformung ist. Das Fangblech 6 hat ein großflächig in die Entwässerungsrinne 2 laufendes Gefälle. Die Entwässerungsrinne 2 weist einen sich über die größte Breite des Nischenraumes 1 erstreckenden Rinnenverlauf auf und ist am Nischeneingang des Nischenraumes 1 gelegen. Weiterhin weist die im Wesentlichen aus zwei Seitenblechen 7, 8 und einem Stirnblech 9 zusammengesetzte Anschlussstruktur den Nischeneingang des Nischenraumes 1 seitlich begrenzende Stoßfänger 10, 11 zur Aufnahme einer nicht dargestellten Andocktraverse auf.

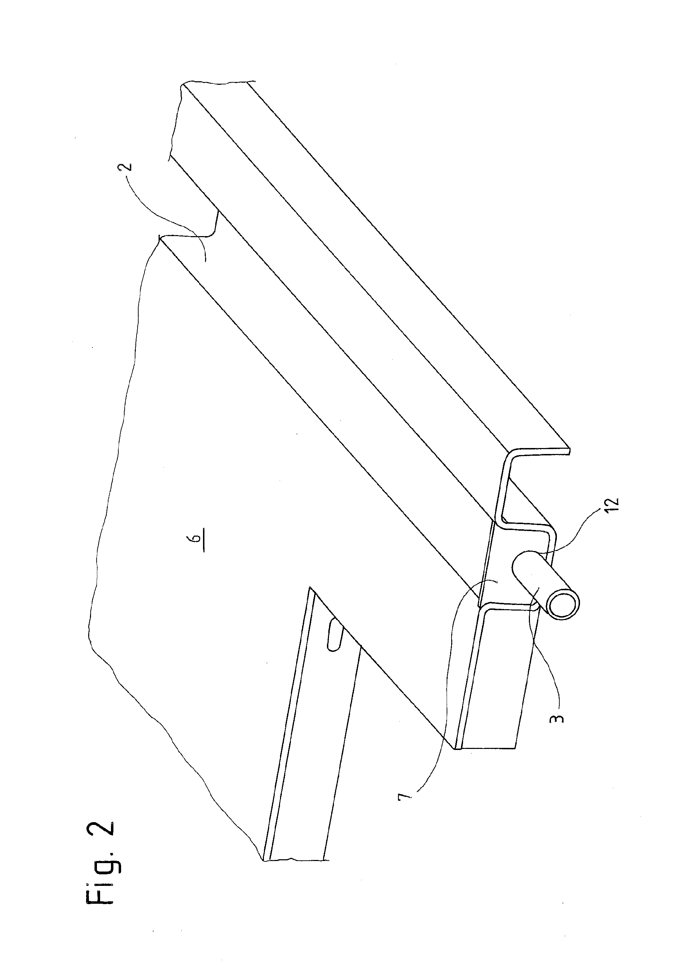

Die Fig. 2 zeigt eine perspektivische Teilansicht der Anschlussstruktur gemäß Fig. 1. Diese Ansicht zeigt das Fangblech 6 mit dem die Entwässerungsrinne 2 stirnseitig begrenzenden Seitenblech 7 im Teilschnitt. Das Seitenblech 7 weist, eine die Rohrleitung 3 aufnehmende Aufnahmeöffnung 12 auf.

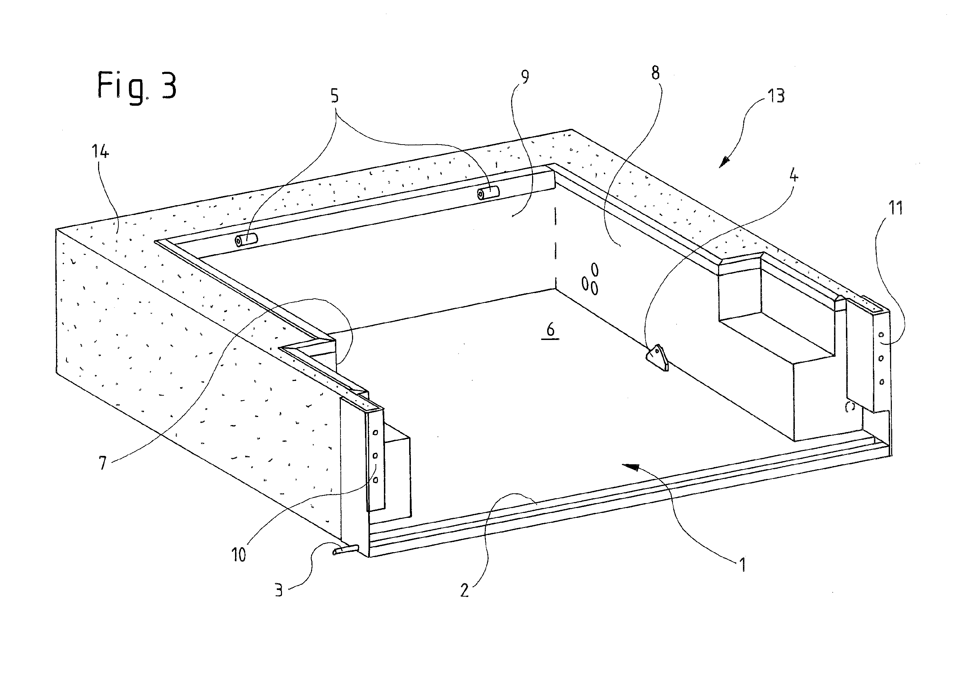

Die Fig. 3 zeigt eine perspektivische Ansicht einer erfindungsgemäßen Baueinheit zum Be- und Entladen von Lastkraftwagen mit einem den Nischenraum 1 ausbildenden Betonfertigteil 13 und der mit dem Beton 14 des Betonfertigteils 13 vergossenem Anschlussstruktur, wie sie in den Figuren 1 und 2 dargestellt ist. Gleiche Bauteile sind mit gleichen Bezugszahlen versehen.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Baueinheit für eine Verladebrücke zum Be- und Entladen von Lastkraftkraftwagen, mit wenigstens einem einen Nischenraum ausbildenden Betonfertigteil und wenigstens einer in dem Betonfertigteil vergossenen Anschlussstruktur,
**dadurch gekennzeichnet,**
**dass** die Anschlussstruktur wenigstens eine Entwässerungsrinne (2) aufweist.

2. Baueinheit nach Anspruch 1, **dadurch gekennzeichnet, dass** die Entwässerungsrinne (2) wenigstens eine Ablaufstruktur aufweist.

3. Baueinheit nach Anspruch 2, **dadurch gekennzeichnet, dass** die Ablaufstruktur wenigstens eine mit dem Betonfertigteil (13) vergossene Rohrleitung (3) aufweist.

4. Baueinheit nach einem der Ansprüche 1 bis 3, **dadurch gekennzeichnet, dass** die Anschlussstruktur als Tragrahmen eines Hebezeuges ausgebildet ist.

5. Baueinheit nach einem der Ansprüche 1 bis 4, **dadurch gekennzeichnet, dass** die Anschlussstruktur wenigstens ein Fangblech (6) aufweist, und dass die Entwässerungsrinne (2) eine in dem Fangblech (6) ausgebildete Umformung ist.

6. Baueinheit nach Anspruch 5, **dadurch gekennzeichnet, dass** das Fangblech (6) wenigstens ein in die Entwässerungsrinne (2) laufendes Gefälle hat.

7. Baueinheit nach einem der Ansprüche 1 bis 6, **dadurch gekennzeichnet, dass** die Entwässerungsrinne (2) einen sich über die Breite des Nischenraumes (1) der Verladebrücke erstreckenden Verlauf aufweist.

8. Baueinheit nach einem der Ansprüche 1 bis 7, **dadurch gekennzeichnet, dass** die Entwässerungsrinne (2) am Nischeneingang des Nischenraumes (1) gelegen ist.

9. Baueinheit nach einem der Ansprüche 1 bis 8, **dadurch gekennzeichnet, dass** die Entwässerungsrinne (2) an einen Problemstoffabscheider angeschlossen ist.
